# EUROPÄISCHE PATENTSCHRIFT

(11) **EP 0 797 215 B1**
(45) Veröffentlichungstag und Bekanntmachung des Hinweises auf die Patenterteilung: **26.04.2000**
(21) Anmeldenummer: 96119904.9
(22) Anmeldetag: 12.12.1996
(51) Int. Cl.: G12B 11/02, G01D 11/28

(54) **Beleuchtbares Zeigerinstrument**
Illuminated pointer instrument
Instrument à aiguille éclairé

(30) Priorität: 18.03.1996 DE 19610469
(43) Veröffentlichungstag der Anmeldung: 24.09.1997
(73) Patentinhaber: ROBERT BOSCH GMBH, 70442 Stuttgart (DE)
(72) Erfinder: Borsdorf, Uwe, Dipl.-Ing., 71229 Leonberg (DE); Laufer, Timo, 70839 Gerlingen (DE)

(56) Entgegenhaltungen:
- DE-A- 3 300 271
- DE-A- 4 121 248
- DE-U- 8 816 551
- US-A- 4 903 171

## Beschreibung

Die Erfindung betrifft ein beleuchtbares Zeigerinstrument mit einem vor einer Skala drehbaren Zeiger nach der Gattung des Hauptanspruchs. Aus der DE 41 21 248 A1 ist bereits ein solches Zeigerinstrument bekannt, welches mit einem vor einer Skala auf einer Zeigerwelle drehbaren Zeiger ausgestattet ist, und wobei die Skala auf einem aus transparenten, lichtleitenden Werkstoff bestehenden Skalenträger angeordnet ist. Der Zeiger besteht ebenfalls aus transparentem, lichtleitendem Werkstoff und wird durch wenigstens eine hinter dem Skalenträger angeordneten Lichtquelle durch Lichtleitung beleuchtbar.

Um eine ausreichende Beleuchtung des Skalenträgers und des Zeigers zu gewährleisten, ohne daß der Betrachter geblendet wird, sind verschiedenste Realisierungsmöglichkeiten für Zeigerinstrumente bekannt. Beim eingangs zitierten Stand der Technik wird ein beleuchtbares Zeigerinstrument beschrieben, bei dem der Lichtanteil für die Beleuchtung des Zeigers und der Skala in weiten Grenzen wählbar ist und bei welchem außerdem die Bauhöhe verringert ist. Hierbei weist der Skalenträger auf der der Lichtquelle zugewandten und damit dem Betrachter abgewandten Seite im Bereich der Lichtquelle eine im wesentlichen planebene Oberfläche auf. Diese planebene Oberfläche auf der Rückseite des Skalenträgers ermöglicht den ungehinderten Lichteintritt von einer Lichtquelle in den Skalenträger. Der Skalenträger ist konzentrisch zur Zeigerwelle auf der dem Betrachter zugewandten Skalenseite zu einer zylindrischen Nabe ausgebildet, die einen Teil des in den Skalenträger eingeleiteten Lichtes an den Zeiger weiterleitet. Bei dem Stand der Technik, von dem die Erfindung ausgeht, ist der Skalenträger auf der dem Betrachter zugewandten Skalenseite konzentrisch zur Zeigerwelle anschließend an die zylindrische Nabe torroidförmig so ausgebildet, daß die Wandstärke des Skalenträgers von einem Minimum am Fuße der zylindrischen Nabe nach außen hin zunimmt.

### Vorteile der Erfindung

Die erfindungsgemäße Vorrichtung mit den kennzeichnenden Merkmalen des Hauptanspruches hat den Vorteil, daß durch das Anbringen einer Senke zur Zeigerbeleuchtung die Beleuchtungsquellen (vorzugsweise Miniatur-Leuchtdioden) und die entsprechende lichtumlenkende Geometrie des Skalenträgers sehr eng um die Zeigerwelle angeordnet werden können. Dadurch wird das bei diesem Beleuchtungsprinzip immer unvermeidliche störende neben der Zeigerkappe austretende Fremdlicht weitgehend minimiert.

Durch die Anbringung einer Senke in die lichtumlenkende Geometrie des Skalenträgers wird die Lichteinkopplung in das lichtleitende Material des Zeigers ermöglicht, dabei ist die Helligkeit des Zeigers durch Variation der Geometrie der Senke in weiten Grenzen sehr leicht regelbar.

Weiterhin hat das Anbringen einer Senke zur Lichteinkopplung in das lichtleitende Material des Zeigers den Vorteil der Materialeinsparung am Skalenträger. Diese Materialeinsparung ergibt sich dadurch, daß keine zusätzliche zylindrische Nabe aus dem Skalenträgermaterial gebildet werden muß. Des weiteren kann die Bauhöhe des Skalenträgers und damit des Zeigerinstrumentes verringert werden.

Durch die in den Unteransprüchen angegebenen Merkmale sind vorteilhafte Weiterbildungen und Ausgestaltungen des erfindungsgemäßen beleuchtbaren Zeigerinstrumentes gegeben. So hat die dem Betrachter zugewandte Seite des Skalenträgers eine lichtumlenkende Kontur, die sich aus mehreren Geraden zusammensetzt und sich wesentlich leichter und einfacher herstellen läßt als eine toroidförmige Kurve. Des weiteren weist der Skalenträger keine Bereiche mit sehr geringer Wanddicke auf, wodurch seine Bruchfestigkeit, zum Beispiel beim Herunterfallen in einer Werkstatt, gegenüber der Ausbildung des Skalenträgers beim Stand der Technik, der im Bereich des Fußpunktes der Nabe eine sehr geringe Wanddicke aufweißt, wesentlich verbessert ist. Letztendlich läßt sich diese Bauweise des Skalenträgers nicht nur in Einzel-, sondern auch in Kombiinstrumenten einsetzen.

### Zeichnung

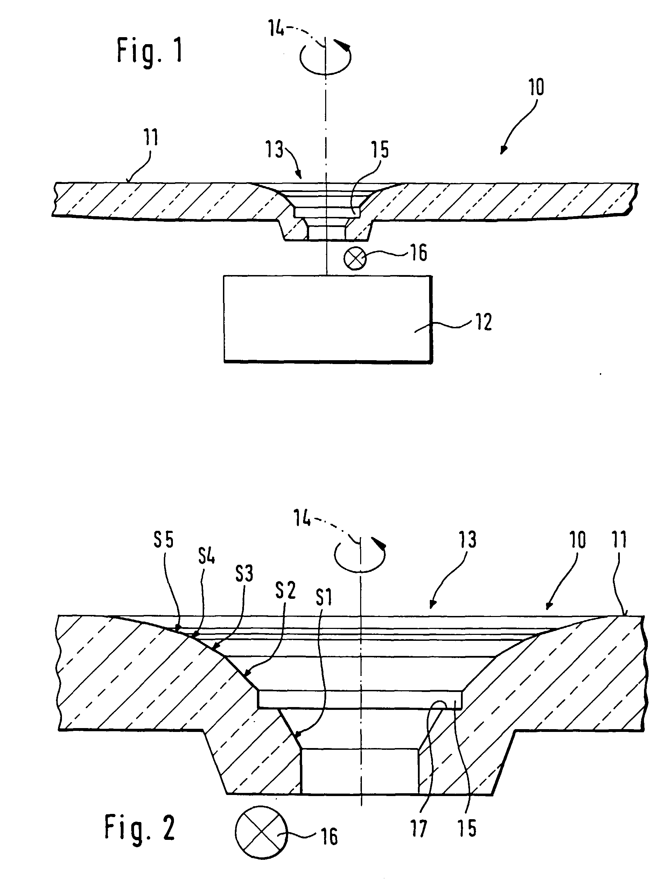

Ausführungsbeispiele der Erfindung sind in der Zeichnung dargestellt und in der nachfolgenden Beschreibung näher erläutert. Es zeigen Figur 1 einen Skalenträger im Längsschnitt und Figur 2 die Ausbildung des Skalenträgers im Bereich der Rotationsachse des Zeigers in vergrößerter Darstellung.

### Beschreibung der Ausführungsbeispiele

Figur 1 zeigt einen Skalenträger 10 in geschnittener Darstellung, wie er beispielsweise in einem Einzelanzeige- oder in einem Kombinationsinstrument verwendet wird. Der Skalenträger 10 besteht aus einem transparenten, lichtleitenden Werkstoff und ist an seiner Oberseite 11 mit einer lichtundurchlässigen Schicht versehen, die lediglich an den Stellen, an denen das Licht zur Beleuchtung der Skalenaufdrucke austreten soll, Aussparungen aufweist oder durch einen lichtdurchlässigen Aufdruck ersetzt ist. Der Skalenträger 10, welcher üblicherweise ein Lichtleiter ist, weist auf seiner Rückseite, also der dem Betrachter abgewandten Seite, ein Zeigerinstrument 12 auf. Dieses Zeigerinstrument 12 ist in der Figur 1 nur schematisch dem Skalenträger zugeordnet. Der Skalenträger 10 weist eine kreisrunde Öffnung 13 auf, durch die eine Drehachse 14, auf welcher ein nicht dargestellter Zeiger angeordnet ist, hindurchragt. Mittels des Zeigerinstrumentes 12 wird dieser nicht dargestellte Zeiger bewegt. Der nicht dargestellte Zeiger ist ebenfalls aus lichtleitendem Material. Der Skalenträger 10 weist im Bereich der Drehachse und zwar konzentrisch zur Drehachse 14 eine kreisförmige Senkung 15 auf.

Zur Deutlichmachung ist in Figur 2 der Ausschnitt des Skalenträgers, durch welchen die Zeigerwelle hindurchgeht, vergrößert. In Figur 2 sind gleiche Teile mit gleichen Bezugszeichen wie in Figur 1 bezeichnet. Die Aussparung 13 des Skalenträgers 10 ist rotationssymmetrisch und durch die rotationssymmetrische Drehachse 14 führt die nicht dargestellte Welle für den ebenfalls nicht dargestellten Zeiger. Die dem Betrachter zugewandte Oberseite 11 des Skalenträgers 10 ist im Bereich der kreisringförmigen Aussparung 13 so ausgebildet, daß mehrere Schrägen, welche unterschiedlichen Neigungswinkel im Verhhältnis zu der dem Betrachter zugewandten Oberfläche 11 des Skalenträgers aufweisen, angebracht sind. In Figur 2 sind diese einzelen Schrägen mit der Bezeichnung S1, S2, S3, S4 und S5 versehen. Die unterschiedlichen Neigungswinkel diser Schrägen S1, S2, S3, S4 und S5 werden dabei ausgehend von der Schräge S1 bis zur Schräge S5, also ausgehend von der Zeigerwelle in Richtung äußerer Rand des Skalenträgers, immer kleiner. In Figur 2 ist die 90°-Umlenkung in den Skalenträger hinein, ausgehend von der Leuchtdiode 16 auf dem Prinzip der Totalreflexion eingeleitet. Die erste Schräge S1 ist hier in ihrem Neigungswinkel so angeordnet, daß durch Unterschreitung des Grenzwinkels der Totalreflexion genügend Licht in Richtung Zeiger austreten kann. An die erste Schräge S1 schließt sich die zylindrische Senke 15 an, so daß aus einer Fläche 17, die parallel zur Oberfläche 10 des Skalenträgers liegt zusätzlich Licht in Richtung des Zeigers austreten kann. Das von der Leuchtdiode 16 gelieferte Licht wird somit in den nicht dargestellten Zeiger und gleichzeitig in den Skalenträger 10 eingespeist. Über eine Veränderung des Neigungswinkels der ersten Schräge S1 und eine Positionierung der Leuchtdiode 16, sowie über die Größe des Durchmessers der Senke 15 kann die Lichtaufteilung auf Zeiger und Skalenträger variiert werden.

## Patentansprüche

1. Beleuchtbares Zeigerinstrument mit einem vor einer Skala auf einer Zeigerwelle drehbaren Zeiger, wobei die Skala auf einem aus transparentem, lichtleitendem Werkstoff bestehenden Skalenträger (10) angeordnet und zusammen mit dem ebenfalls aus transparentem, lichtleitendem Werkstoff bestehenden Zeiger durch wenigstens eine hinter dem Skalenträger (10) angeordnete Lichtquelle (16) durch Lichtleitung beleuchtbar ist und der Skalenträger (10) auf der der Lichtquelle (16) zugewandten und dem Betrachter abgewandten Seite im Bereich der Lichtquelle eine im wesentlichen planebene Oberfläche hat und daß der Skalenträger zur Aufnahme einer Zeigerwelle eine Aussparung (13) aufweist, dadurch gekennzeichnet, daß im Bereich der Ausparung (13) des Skalenträgers (10) eine Senke (15) konzentrisch in die dem Betrachter zugewandte Oberfläche (11) des Skalenträgers (10) eingebracht ist und eine Fläche (17) der Senke parallel zu der dem Betrachter zugewandten Oberfläche (11) des Skalenträgers (10) liegt.

2. Beleuchtbares Zeigerinstrument nach Anspruch 1, dadurch gekennzeichnet, daß die dem Betrachter zugewandte Oberseite (11) des Skalenträgers (10), ausgehend von der Aussparung (13) mehrere Schrägen (S1 bis S5) unterschiedlicher Neigungswinkel aufweist und wobei der Neigungswinkel der einzelnen Schrägen (S1 bis S5) ausgehend von der Zeigerwelle in Richtung äußerer Rand des Skalenträgers im Verhältnis zu der dem Betrachter zugewandten Oberfläche (11) des Skalenträgers (10) abnimmt.

3. Beleuchtbares Zeigerinstrument nach Anspruch 2, dadurch gekennzeichnet, daß die Senke (15) zwischen der ersten Schräge (S1) und der zweiten Schräge (S2) angebracht ist, wobei die durch Tiefe und Durchmesser bestimmte Geometrie der Senke die Zeigerhelligkeit bestimmt.

4. Beleuchtbares Zeigerinstrument, nach Anspruch 2 und 3, dadurch gekennzeichnet, daß die erste Schräge (S1) einen Neigungswinkel aufweist, der kleiner als der Grenzwinkel der Totalreflexion ist, wobei der Neigungswinkel der ersten Schräge (S1) die Aufteilung des Lichtes an Zeiger und Skalenträger bestimmt.

## Claims

1. Illuminated pointer instrument having a pointer which can rotate on a pointer shaft, in front of a scale, the scale being arranged on a scale support (10) consisting of transparent, light-conducting material and, together with the pointer, which likewise consists of transparent, light-conducting material, being illuminated by light conduction by at least one light source (16) arranged behind the scale support (10), and the scale support (10) having, on the side facing the light source (16) and facing away from the observer, an essentially flat planar surface in the area of the light source, and the scale support having a cutout (13) to accommodate a pointer shaft, characterized in that in the area of the cutout (13) in the scale support (10), a countersunk portion (15) is made concentrically in that surface (11) of the scale support (10) which faces the observer, and one face (17) of the countersunk portion is located parallel to that surface (11) of the scale support (10) which faces the observer.

2. Illuminated pointer instrument according to Claim 1, characterized in that the top (11) of the scale support (10), facing the observer, has a number of bevels (S1 to S5) of different angles of inclination, starting from the cutout (13), and in that, starting from the pointer shaft, the angle of inclination of the individual bevels (S1 to S5) decreases in the direction of the outer edge of the scale support in relation to that surface (11) of the scale support (10) which faces the observer.

3. Illuminated pointer instrument according to Claim 2, characterized in that the countersunk portion (15) is made between the first bevel (S1) and the second bevel (S2), the geometry of the countersunk portion, which is determined by depth and diameter, determining the brightness of the pointer.

4. Illuminated pointer instrument according to Claims 2 and 3, characterized in that the first bevel (S1) has an angle of inclination which is less than the limiting angle of total reflection, the angle of inclination of the first bevel (S1) determining the division of the light between pointer and scale support.

## Revendications

1. Instrument à aiguille pouvant être éclairé comprenant une aiguille qui peut tourner devant un cadran sur un axe, le cadran étant disposé sur un support de cadran (10) réalisé en une matière transparente, conduisant la lumière et pouvant être éclairé par guidage de la lumière en même temps que l'aiguille réalisée également en une matière transparente, conduisant la lumière, par au moins une source de lumière (16), disposée derrière le support (10) du cadran, et le support (10) du cadran ayant sur sa face située à l'opposé de l'observateur et tournée vers la source de la lumière (16), dans la zone de la source de la lumière, une surface sensiblement plane, et le support de cadran présentant un évidement (13) pour recevoir un axe d'aiguille,
caractérisé en ce que
- dans la zone de l'évidement (13) du support de cadran (10) on a pratiqué une creusure (15) de façon concentrique dans la face supérieure (11) tournée vers l'observateur du support du cadran (10), et
- une surface (17) de la creusure se trouve parallèle à la face supérieure (11) du support du cadran (10), tournée vers l'observateur.

2. Instrument à aiguille pouvant être éclairé, selon la revendication 1,
caractérisé en ce que
la face supérieure (11) du support du cadran (10), tournée vers l'observateur, présente plusieurs biseaux (S1 à S5) ayant différents angles d'inclinaison, en partant de l'évidement (13), et l'angle d'inclinaison des différents biseaux (S1 à S5) décroît en partant de l'axe de l'aiguille en direction du bord extérieur du support du cadran par rapport à la face supérieure (11) du support du cadran (10), tournée vers l'observateur.

3. Instrument à aiguille pouvant être éclairé, selon la revendication 2,
caractérisé en ce que
la creusure (15) est disposée entre le premier biseau (S1) et le deuxième biseau (S2), la forme géométrique déterminée par sa profondeur et son diamètre, déterminant la luminosité de l'aiguille.

4. Instrument à aiguille pouvant être éclairé, selon la revendication 2 et la revendication 3,
caractérisé en ce que
le premier biseau (S1) présente un angle d'inclinaison plus petit que l'angle limite de réflexion totale, l'angle d'inclinaison du premier biseau (S1) déterminant la répartition de la lumière sur l'aiguille et sur le support du cadran.
